# EUROPEAN PATENT APPLICATION

(11) **EP 4 283 487 A1**
(43) Date of publication of application: **29.11.2023**
(21) Application number: 22382498.8
(22) Date of filing: 25.05.2022
(51) Int. Cl.: G06F 16/332, G06F 16/33, G06F 16/38

(54) **METHOD AND COMPUTER SYSTEM FOR ANSWERING USER GENERATED QUESTIONS**

(71) Applicant: Zapiens Technologies, S.L., 33213 Gijón Asturias (ES)
(72) Inventor: The designation of the inventor has not yet been filed
(74) Representative: Grünecker Patent- und Rechtsanwälte PartG mbB

(57) **Abstract**

The invention refer to a method for answering user generated questions implemented in a knowledge base computing system (100), the knowledge base computing system comprising a database (104) which stores question-and-answer pairs and metadata related to the question-and-answers pairs, the method comprising the knowledge base computer system:

a) receiving (11) from a user computing device a user question, the user question including a question text having one or more words and/or sentences in a natural language; b) performing (12) a search for question-and-answer pairs and calculating (13) a score for question-and-answer pairs based on keywords in the questions text and based on the metadata related to the question-and-answer pairs; c) comparing (14) the score to a predefined threshold and based on the result of the comparison perform a decision step (15) to either forward (16) at least the question-and answer pair with the highest score to the user computing device or forward (17) the question text to another computing device or output device in order to obtain an human expert answer, to be forwarded to the user computing device and storing the questions and the answer as a new question-and-answer pair d) receiving (18) from the user computing device a rating about the sent answer or question-and-answer pair and storing (19) the rating in the metadata of the question-and answer pair of the sent question-and-answer pair or sent answer.

## Description

The present invention refers to a method and a computing system for answering user generated questions.

Document US10692006 B1 discloses a chatbot that can use a knowledge base. A model can be trained to select human experts that are likely to be able to provide a good answer to a question by using for example a vector comprising characteristics of a question and of the person posing the question and a vector comprising characteristics of a possible expert. The model can be trained to produce a value predicting how good an identified expert's answer is likely to be.

Such automatic learning concepts however have not proven useful in practice.

It is therefore an object of the present invention to provide a method and a computing system that allows for faster learning of a knowledge base and a better way of keeping a knowledge base up to date.

The above problem is solved by the method according to claim 1 and the computing system of claim 12.

The knowledge base computing system comprises a data base which may be e.g. a relational data base which stores question-and-answer-pairs and metadata related to the question and answer-pairs.

The questions may be stored as a text having one or more words and/or sentences in a natural language. The answers may be stored as comprising text, hyperlinks, images, recordings and also other kinds of information or links to such information.

The metadata may be additional data with any kind of corresponding formats such as numbers such as integer data or floating point data, text, time, binary data such as flags, etc..

In the method the knowledge base computing system receives from a user computing device a user question. This question includes a question text and has one or more words or sentences in a natural language.

The knowledge base computing system performs a search for question-and-answer-pairs and calculates a score for a question-and-answer-pair based on key words in the question text and based on the metadata related to the question-and-answer-pairs. For this purpose stop words may be removed from the text of the question in order to search for question-and-answer-pairs. Further, any word that uses two or more capital letters in a row may be identified as an acronym and an acronym search can be performed before performing a search for question-and-answer-pairs by substituting the word with two or more capital letters in a row by a found explanation of the acronym.

The key words identified in the question text can be compared to key words stored in the metadata for a question and answer pair. The key words stored in the metadata for a question-and-answer-pair can be keywords used in the question and/or key words used in the answer.

Depending on the absolute or relative number of key word matches a score for a question-and-answer-pair can be calculated. However, a score for a question-and-answer-pair can also be calculated by other methods based on the key words of the question.

The calculated scores for the question-and-answer-pairs are compared to a score of a predefined value and based on the result of the comparison a decision step is performed. At least the question-and-answer-pair with the highest score is forwarded to the user computing device or the question text is forwarded to another computing device or output device in order to obtain a human expert answer. Such a human answer may then be forwarded to the user computing device and a new question-and-answer-pair is created based on the question and the expert generated answer.

The response forwarded to the user computing device may be given by one question-and-answer-pair only or given by multiple question-and-answer-pairs.

The knowledge base computing system then receives from the user computing device a rating about the sent answer(s) and/or question-and-answer-pair(s) and stores the rating in the metadata of the question-and-answer-pair of the sent question-and-answer-pair or a sent answer.

This rating is stored in the metadata and can therefore be used for further searches.

In practice, it has been found out that involving human generated ratings about sent answers lead to faster development of a knowledge base in comparison to other models that use only artificial intelligence optimisation schemes based on user behaviour such as a user clicking or not clicking on links provided in a result set.

The calculation of a score may for example comprise extracting key words from the question text and calculating a primary score based on key word matching between the extracted key words from the question text and keywords stored in the metadata. Further, a secondary score can be calculated based on the metadata of a question-and-answer-pair alone and the two scores may be combined in order to obtain the score used in the comparing step.

In this way it is possible for example to provide question-and-answer-pairs with a lower score which have received a low rating in the receiving step mentioned above compared to others that have received a higher rating. On the other hand question-and-answer-pairs or a question-and-answer-pair that has received a high rating in the above receiving step may have a higher calculated score although the primary score based on the keyword matching was lower than the primary score of another or other question.

Also, other human related information may be taken into account thereby e.g. if the answer was provided by a person with which a low quality of the answer may be associated.

It is also possible to provide metadata that determine a time by which an answer is discarded in view of changed circumstances. To give an example, if the knowledge base is to provide answers concerning a particular software and that software is not used anymore all answers related to that software may be provided with a metadata that leads to a very low score by providing a very low secondary score. Thereby it is possible to filter out answers of question-and-answer-pairs that relate to outdated knowledge.

The keywords stored in the metadata may furthermore include for example synonyms of other keywords. Thereby searches for question-and-answer-pairs are extended to semantically potentially relevant answers of question-and-answer-pairs. Furthermore, the keywords may include acronyms having at least two characters such as two capital characters in a row.

The metadata for a question-and-answer-pair used for calculating the secondary score may include one or more of the following.
The time of creation of the question-and-answer-pair;
The last time the question-and-answer-pair was sent;
The number of times the question-and-answer-pair was sent;
The user who created the answer or the question-and-answer-pair;
The user who posed the question of the question-and-answer pair.

The time of the creation of the question-and-answer-pair may be useful in order to discard outdated answers of question-and-answer-pairs. Here, for example, if the time of creation is before the time by which the answer of the question-and-answer-pair became obsolete the question-and-answer-pair can be removed or scored with a low secondary score as explained above or further below.

The last time the question-and-answer-pair was sent can be an indicator of the relevance of the question. E.g. answers that have not been sent for a certain amount of pre-set time can be discarded from the knowledge base in order to keep the knowledge base up to date and reduce memory space and computational search costs.

The number of times the question-and-answer-pair was sent can be useful in order to identify potentially helpful answers to questions.

The information about the user who created the answer to a question-and-answer-pair or information about the user who posed the question of the question-and-answer-pair may be useful in determining the value of the answer e.g. for example if the answer was created by a user who left the group of persons that has access to the knowledge base or is only very recently in the group that has been provided access to the knowledge base can be considered to be of potentially lower quality.

The metadata used for calculating a score may contain each rating received for a question-and-answer-pair which includes the information about the rating itself at the time of the rating and the user by whom the rating was given. Also this information has been found to be useful in having the knowledge base accumulate useful knowledge in short time and to be kept updated later on.

The metadata of a question-and-answer-pair used for calculating the secondary score may also include the average of all ratings received for a question and answer pair. This will be the most easy to use number in order to calculate the secondary score of a question and answer pair. In addition, the number of ratings received is relevant in order to find out whether the average has some statistical relevance. For example, if there are only one or two or three or less than five or less than ten ratings, the average rating may be considered to be of little value in calculating the secondary score.

Furthermore, the metadata may have a validation flag. The validation flag indicates whether an answer provided has been reviewed by an expert who has authority to review answers of question-and-answer-pairs. Such a validation flag also allows to improve quickly the quality of the question-and-answer-pairs in the knowledge base.

Furthermore, the metadata of a question-and-answer-pair used for calculating the secondary score may include a question type indicator. The question type may be a *"who", "where", "how"* or a *"when"* and the like. A question type may be indicated by the kind of question keywords such as *"when", "how", "where", "who",* ... etc.

The metadata for calculating the secondary score of a question-and-answer-pair may also include an expiration date. Thereby already at the time of creating the question and answer pair a date by which the question-and-answer pair is going to be obsolete can be set. The method may be implemented in such a way that question-and-answer-pairs for which the expiration date has expired are not provided with a score above zero and/or are not forwarded to the computing device of a user.

The method optionally includes in the step of calculation of the secondary score weights that are applied to the metadata in the calculation of the secondary score. These weights can be modified individually. They can be modified by a human super user or by an optimisation scheme used in the knowledge base.

Further optionally the calculation of the primary score includes a semantic analysis of the question text comprising analysing the question text for a question type keyword such as *"who", "when"* or *"how", "where", etc.* and determining a question type and matching the determined question type to a question type stored in the metadata.

By this it is avoided to provide answers that do not make sense to the question although many keywords may match between the user question and the keywords in the metadata of the question and answer pair.

The method may comprise a step of combining the primary score and the secondary score by a weighted summing or weighted multiplying of the primary score and the secondary score wherein the weights of the weighted summing or weighted multiplying can be individually modified or are modified based on ratings provided by users.

In the method the received rating may optionally comprise a plurality of rating components including one or more of the rating components that rate the perception of the provided answer being helpful to the posed question and a rating component rating the perception of the user concerning the quality of the answer including either whether the user has learnt some know-why and not only know-how. The quality of the answers provided by a knowledge base computing system are typically regarded to be higher if the question provided by a user is answered not only with a know-how but also with a know-why as this amplifies the knowledge of the user above the mere know-how.

Therefore, it is advantageous to obtain the rating with two or more rating components that can be evaluated and/or stored in the meta data separately.

A method may optionally include a decision step of discarding question-and-answer-pairs from the database the decision step being based on one or more of the following:
the rating received from the computing device;
the review of the question-and-answer-pair by a human expert;
the time the question-and-answer-pair was created;
the average rating of the question-and-answer-pair;
the user who created the answer of the question-and-answer-pair:
   the expiry of an expiration date of the question-and-answer-pair.

By such a discarding step it is possible to remove invalid or outdated question-and-answer-pairs from the knowledge base which allows to keep the information in the knowledge base up to date. Mere automatic optimisation schemes that try to optimise answers that are provided to a user on artificial intelligence only or other optimisation schemes do discard question-and-answer-pairs only by long lasting evaluations based on slow machine learning. E.g. only after an outdated answer has been provided to a user several times and was found useless by a user or several users such that the machine learning system slowly identifies the answer as not useful for users by what ever means, the machine learning algorithm stops providing that answer or provides it less often. However, thereby the answer had to be provided several times to a user also it has already been outdated.

The method may further comprise a review decision step which is taken based on the rating and/or ratings received for a question-and-answer-pair and which causes a question-and-answer-pair to be sent and/or outputted to a human expert for review of the answer and of the metadata.

With this review decision step the quality of a question-and-answer-pair can be checked by a human expert which helps to update the information in the knowledge base or to discard outdated knowledge of the knowledge base.

With the question-and-answer-pair which is forwarded to the user computing device with the highest score one or more other question-and-answer-pairs with a score at least above a predefined threshold or with a score of at least a predefined percentage of the score of the highest score, such as all question-and-answer-pairs with a score of at least 80% of the highest score, can be forwarded to the user computing device. Thereby the user is provided with several question-and-answer-pairs which allows him to choose from. Furthermore, for several i.e. more than one question-and-answer-pairs the rating from the user can be received.

In the following possible embodiments of the method and of the computing system are explained. In this regard, reference is made to the figures, which show:
- Figure 1: Overview of different steps taken in the method according to the invention
- Figure 2: Steps taken in the step of calculating a score for question-and-answer-pairs
- Figure 3: A step taken in the step of performing a search for a question-and-answer-pair
- Figure 4: A step taken when receiving from the user computing device a rating;
- Figure 5: The steps taken in the decision step of discarding question-and answer-pairs;
- Figure 6: Overview of a computing system

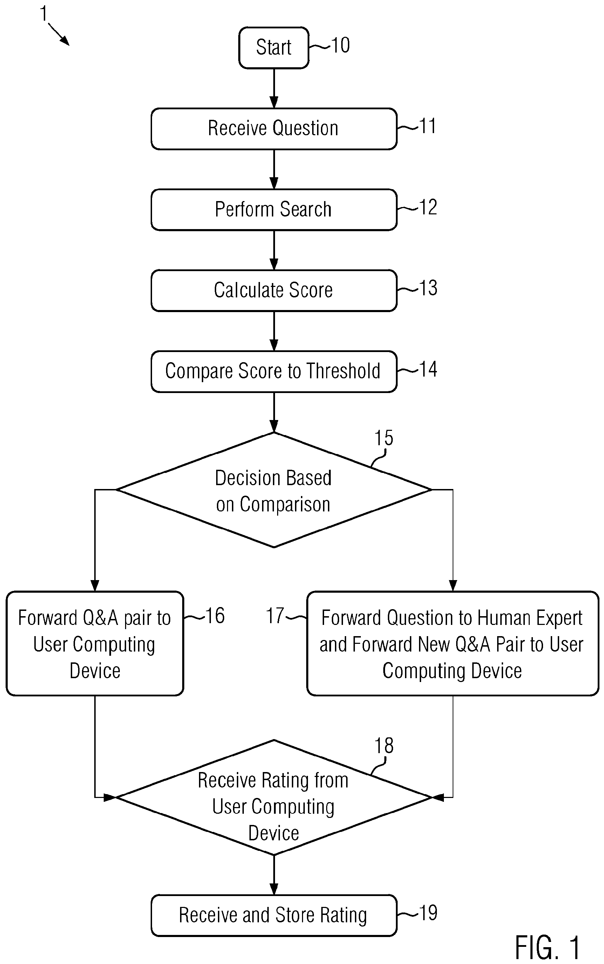

In figure 1 method steps of a method according to the invention are shown. After start (10) of the method a knowledge base computing system receives (20) a question from a user computing device. This user question includes a question text having one or more words and/or sentences in a natural language. The question may be for example *"How do I provide straight arrows with our software?".*

From that user question including the question text on the one hand it may first be tried to obtain a keyword that corresponds to a question tag. That keywords may include question keywords such as *"who", "when"* or *"how" etc.* as question type keywords can later be used for determining a matching question-and-answer-pair in case that for that question-and-answer-pair in the metadata a question type is stored. In the above example the question keyword will be *"How".*

Furthermore, the text of the user question can be analysed in order to obtain keywords. Keywords can be any words that are not stop words and words which have at least two or at least three letters. In the above example e.g. the keywords "how", "provide" "straight" "arrows" and "software" may be extracted. "do", "I", "with" and "our" can be considered as stop words.

Furthermore, words with two or more capital letters can be treated as keywords independently of the length of the keyword. Words with two or more capital letters can be searched in a database concerning acronyms. In the search for question-and-answer-pairs the acronym as well as the semantic meaning of the acronym can be used. In the above example the user may have used "SW" instead of "software". In this case the acronym "SW" may be used as a keyword as it has two capital letters or the word "software" may be used as the meaning of "SW".

Then a search (30) for question-and-answer-pairs is performed including calculating a score (13) for question-and-answer-pairs based on keywords extracted from the question text and based on the metadata related to the question-and-answer-pairs. The score can be calculated e.g. based on the number of matching keywords between the keywords in the question text and keywords in the question or keywords in the question and answer pair. The keywords of the question-and-answer-pair are stored in the metadata of the question-and-answer-pair. The search is therefore based on keywords in the question text and metadata related to the question-and-answer-pairs. By having the keywords of the question-and-answer-pair in the meta data the search can be done much more efficient in terms of computing resources as there is no need to evaluate the entire text of the stored question-and-answer-pair in order to compare the question-and-answer-pair with the keywords of the question. The search can be done based on data fields that are provided with single words only in the relational data base which is much faster than having to evaluate string texts comprising several words together in one data field.

The keywords that are to be stored in the meta data for a question-and-answer-pair are extracted from an answer and/or question of a question-and-answer-pair only once when the question-and-answer-pair is stored in the database or stored again after a change or update to the information in the question-and-answer-pair. After having done the computationally expensive step of extracting the keywords to be stored in the meta data they can be used repeatedly with only little computational costs afterwards.

Depending on the result of the search the score is calculated which may be based e.g. on the number of matching keywords between the keywords extracted from the question text and the keywords stored in the meta data of the question and answer pairs. The score may also be based on a match of the question type. The score may be based on further information provided in the metadata of a question-and-answer-pair.

The scores for the result set of question-and-answer-pairs is compared (14) to a predefined threshold. Depending on the result of the comparison of the score(s) the decision is taken to either forward (16) at least the question-and-answer-pair with the highest score to the user computing device or forward (17) the question text to another computing device or output device in order to obtain a human expert answer to be forwarded to the user computing device. In the later case a new question-and-answer-pair is created storing the question and the answer as a new question and answer pair. Also the metadata are populated in that stage e.g. with the question type, keywords extracted from the answer and/or the question, the user who posed the question and/or the human expert that answered the question and other meta data mentioned above or below.

Once the question-and-answer-pair has been forwarded to the user computing device the knowledge based computing system receives (18) from the user computing device a rating about the sent answer and/or question-and-answer-pair and stores (19) the rating in the metadata of the question-and-answer-pair of the sent question-and-answer-pair or sent answer.

Storing the rating for question-and-answer-pairs allows later on to compute the score in any further searches based on such ratings received by humans.

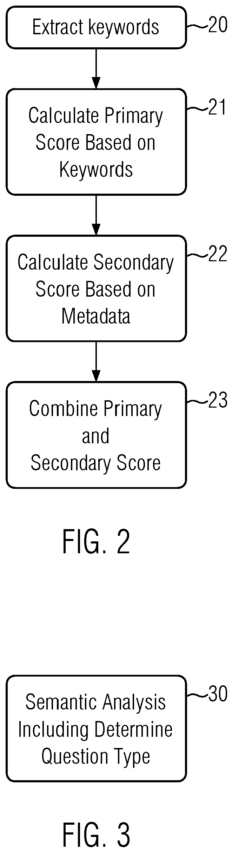

Calculation of the score is further depicted in figure 2. After the keywords have been extracted (20) from the question text a primary score is calculated (21) based on those keywords together with metadata related to question-and-answer-pairs. Furthermore, a secondary score is calculated (22) based on the metadata alone. For example for a question-and-answer-pair a rating previously received for that question-and-answer-pair can be used in order to calculate the secondary score. The secondary score, however, can be based on further information provided in the metadata as detailed further below.

Once the primary score and the secondary score are calculated the two scores are combined (23) to the one score that is used in the comparing step explained above. For example if a primary score provides a match in the keywords of 80% and the secondary score calculated based on the metadata of a question-and-answer-pair alone is 60% then that the total score may be the average of the two scores such as 70% or it may be the product of the two scores which is 48% or it may be the sum of the two scores which is 140%.

Other possible mathematical combinations of the two scores in order to calculate the one score used in the comparing step may be considered.

In the above multiplications or summations also the scores may be weighted in order to give more emphasis on the keyword search or more emphasis on the metadata search.

In figure 3 the step of a semantic analysis including determination of the question type is shown (30). This step is performed in the performing step of performing the search (12) as explained above. The question type allows to classify questions into certain types of questions such as *"who", "when", "where",* "how" questions ... etc.

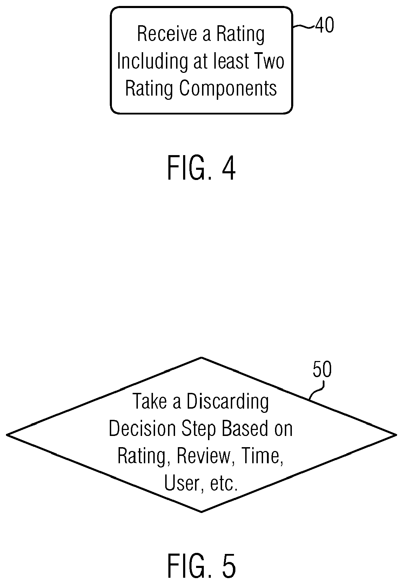

In figure 4 the step of receiving a rating (40) that includes at least two rating components is shown. The possibility to receive more than one simple information about the question-and-answer-pairs allows to optimise the knowledge of a knowledge base quickly. A first rating obtained may e.g. be related to the question of whether a user was satisfied with the answer or whether he gained knowledge by receiving a question and answer pair. Another kind of question of a rating may be whether the user learns something more than only about one specific issue he asked but whether he was able to understand or develop a deeper understanding of the issue his question was related to. Continuing with the above question of *"How do I provide straight arrows with our software?"* a user may learn how to create straight arrows or he may learn how to straighten existing arrows although he is only asked the question about one of those two actions. Furthermore, he may be informed of how the software creates or handles the orientation of arrows so that the user gains a deeper knowledge of the task. In addition, the rating may include a component about whether or not that language used in the answer was understandable or not or whether the answer created new questions ... etc.

These different rating components allow the knowledge base computing system to better optimise the ratings of a user than with only one rating. Further a rating having more than one rating component is helpful in order to decide to have a question-and-answer-pair reviewed by an expert. In case e.g. the different ratings components differ substantially from one another for a question-and answer-pair than this may trigger a review of the question-and-answer-pair by a human expert as outlined further below. For example, if the rating about the content of the question-and-answer-pair is above average (of all ratings ever received or received in a predefined time window) but the rating about whether the language was understandable is below average (of all ratings ever received or received in a predefined time window) may trigger the question-and answer-pair to be forwarded to an expert for review together with the different rating components, which are stored in the meta data anyway as explained above and below.

Knowledge in the knowledge base computing system can be maintained optionally with certain method steps provided by the knowledge base computing system that allows the human super user to supervise the information in the knowledge base computing system and how it is used and evaluated in the methods described above and below. For example the knowledge base computing system may trigger events which cause a human being to e.g. take a decision about discarding question-and-answer-pairs from the database. Such a decision step may be taken by the knowledge base computing system on its own or may require confirmation of a human super user or the decision is taken by the super user alone but the knowledge base computing system provides the interface for incorporating such decisions and preparing such decisions concerning a particular question-and-answer-pair, e.g. by providing a particular dedicated graphical user interface.

The decision step (50) of discarding a question-and-answer-pair from the database as shown in Fig. 5 may be for example caused by one rating or several ratings received from one or more user computing devices. The decision step to discard a question-and answer-pair may also result from a review of a question-and-answer-pair by a human expert. Further, it is possible to initiate such a decision step by the time the question-and-answer-pair was created or by expiration of an expiration date of the question-and-answer-pair set beforehand. Also, the user who created the answer of a question-and-answer-pair may be a criteria. A user who has been identified as providing continuously answers that are not helpful or are difficult to understand or the same, may be discarded from the database.

Such human intervention at the time of discarding question-and-answer-pairs from the database are advantageous over purely computational systems that require a machine learning process to take place as such machine learning requires several feedback from users before machine learning algorithm develops into corresponding scores for question-and-answer-pairs that would lead to an automatic discarding of a question and answer pair.

The disclosed methods are superior in terms of memory usage and computational costs by maintaining a data base up to date with less computational effort compared to pure machine learning systems that tend to learn slowly only.

A similar reasoning applies to a decision step by which a question-and-answer-pair is forwarded to a human expert for review. The machine algorithm learning systems tend to need too much time or too iterations before identifying that a question-and-answer-pair shall be reviewed by a human expert.

Further, after or before the knowledge base computing system having received/receiving the rating the knowledge base computing system may receive a further question including question text from the user computing device which refer to the previously received question. This second question will dealt with in the same way as the first question by the knowledge base computing system, but any rating received in regard of the second question-and-answer-pair provided to the user computing device may be used to also evaluate as a rating provided of the first question-and-answer-pair provided to the user computing device.

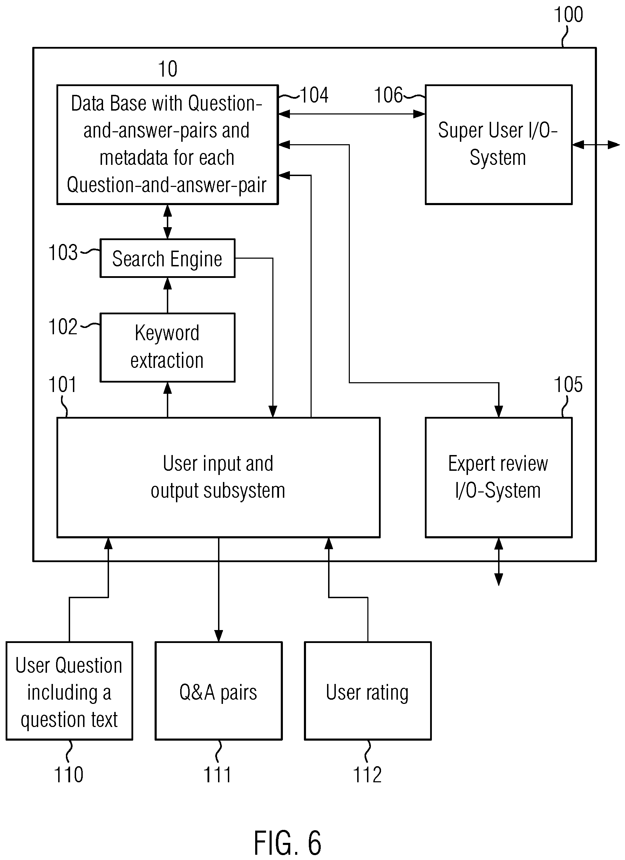

In Fig. 6 the different components of the knowledge base computing system (100) are shown.

A user input and output subsystem (101) is adapted to receive a user question (110) including a question text from a user computing device. Such a user question is provided to a keyword extraction subsystem (102) which extracts keywords from the received question text. With these keywords the search engine (103) searches a database (104) with question-and-answer-pairs, provides the result to the search engine which forwards question-and-answer-pairs to the user computing device via the user input and output subsystem (111). With the user input and output subsystem (111) also the user rating (112) is received the results of which are stored in the database (104). The knowledge base furthermore comprises an expert review input/output system (105). Such an expert review input/output system allows a user different from a common user -here an expert user- to review question-and-answer-pairs stored in the database. The expert user has different access rights (such as read/write authorizations provided) to the information stored in the data base (104) compared to a user how has access to the system through the user input and output system 101 .

Furthermore, the knowledge base comprises super user input/output system 106. This super user input/out user system allows modification or discarding of question-and-answer-pairs from the database by a specified graphical user interface. This user interface also provides the capability of initiating expert review of question-and-answer-pairs stored in the database as explained above.

## Claims

1. Method for answering user generated questions implemented in a knowledge base computing system (100), the knowledge base computing system comprising a database (104) which stores question-and-answer pairs and metadata related to the question-and-answers pairs, the method comprising the knowledge base computer system:
a) receiving (11) from a user computing device a user question, the user question including a question text having one or more words and/or sentences in a natural language;
b) performing (12) a search for question-and-answer pairs and calculating (13) a score for question-and-answer pairs based on keywords in the questions text and based on the metadata related to the question-and-answer pairs;
c) comparing (14) the score to a predefined threshold and based on the result of the comparison perform a decision step (15) to
either forward (16) at least the question-and answer pair with the highest score to the user computing device
or forward (17) the question text to another computing device or output device in order to obtain an human expert answer, to be forwarded to the user computing device and storing the questions and the answer as a new question-and-answer pair
d) receiving (18) from the user computing device a rating about the sent answer or question-and-answer pair and storing (19) the rating in the metadata of the question-and answer pair of the sent question-and-answer pair or sent answer.

2. Method according to claim 1, wherein the calculation of the score comprises:
extracting keywords (20) from the question text;
calculating a primary score (21) based on keyword matching between the extracted keywords from the question text and keywords stored in the metadata; and
calculating a secondary score (22) based on the metadata of a question-and-answer pair alone; and
combining (23) the primary score and the secondary score to the score used in the comparing step.

3. Method according to claim 2, wherein the keywords stored in the metadata include one or more of:
synonyms of other keywords;
acronyms having at least two characters.

4. Method according to claim 2 or 3, wherein the metadata of a questions-and-answer pair used for calculating the secondary score include one or more of the following data:
time of creation of the question-and-answer pair;
last time the question-and-answer pair was sent;
number of times the question-and-answer pair was sent;
user who created the answer of the question-and-answer pair;
user posed the question of the question-and-answer pair;
for each rating received for the question-and-answer pair:
the rating and/or
the time of the rating and/or
the user who has given the rating;
the average of all rating received for the question-and-answer pair;
the number of ratings received question-and-answer pair;
a validation flag;
a question type;
an expiration date;
identification information about other question-and-answer pairs that have been sent in the context of a loop of several questions and answers;
number of question-and-answer pairs that have been sent in question and answer loop after having sent the question-and-answer pair.

5. Method according to any of claims 2 to 4, wherein the calculation of the secondary score includes weights that are applied to the metadata or data based on the metadata in the calculation of the secondary score, wherein optionally the weights can be individually modified.

6. Method of any of claims 2 to 5, wherein the calculation of the primary score (21) includes a semantic analysis (30) of the question text comprising:
analyzing the question text for question type key words such as "who", "when" or "how" and determining a question type and matching the determined question type to a question type stored in the metadata.

7. Method of any of claims 2 to 6, wherein the primary score and the secondary score are combined (23) by a weighted summing or weighted multiplying of the primary score and the secondary score, wherein the weights of the weighted summing or weighted multiplying can optionally be individually modified or be modified based on the ratings provided by users.

8. Method of any of claims 1 to 7, wherein the received rating comprises a plurality of rating components (40) including one or more of:
a rating component rating the perception of the provided answer being helpful to the provided question
a rating component rating the perception of the user concerning the quality of the answer including e.g. if the user has learned some know-why and not only know-how.

9. Method of any of claims 1 to 8, wherein the method includes a decision step (50) of discarding a question-and-answer pair from the database the decision step being based on one or more of the following:
the rating received from the user computing device;
a review of the question and answer pair by a human expert;
the time the question-and-answer pair was created;
the average rating of the question-and-answer pair;
the user, who created the answer of the question-and-answer pair;
the expiry of an expiration date of the question-and-answer pair.

10. Method according any of claims 1 to 9, wherein a review decision step is taken which is based on the rating or ratings received for a question-and answer pair which causes the question-and-answer pair to be sent and/or outputted to a human expert for review of the answer and of the metadata.

11. Method according to any of claims 1 to 10, wherein the question-and answer pair with the highest score is forwarded to the user computing device together with one or more other question-and answer pairs with a score of at least above a predefined threshold or with a score of at least a predefined percentage of the score of the highest score such as all question-and-answer pairs with a score of at least 80% of the highest score.

12. Method according to any of claims 1 to 11, wherein the knowledge base computing system receives from the user computing system a further question which includes the information that the further question is related to one or more previous questions and wherein the metadata of one or some or all previous questions are updated based on information provided by or in the further question.

13. Knowledge base computing system (100) including computer readable instructions to perform a method as of any of claims 1 to 12.
